(19) Europäisches Patentamt
European Patent Office
Office européen des brevets

(11) **EP 1 909 120 A1**

(12) **EUROPEAN PATENT APPLICATION**
published in accordance with Art. 153(4) EPC

(43) Date of publication:
**09.04.2008 Bulletin 2008/15**

(51) Int Cl.:
**G02B 5/08** (2006.01)

(21) Application number: **06780692.7**

(22) Date of filing: **30.06.2006**

(86) International application number:
**PCT/JP2006/313125**

(87) International publication number:
**WO 2007/007570 (18.01.2007 Gazette 2007/03)**

(84) Designated Contracting States:
**DE ES GB IT NL**

(30) Priority: **11.07.2005 JP 2005201541**

(71) Applicant: **Asahi Glass Company, Limited**
**Chiyoda-ku**
**Tokyo 100-8405 (JP)**

(72) Inventors:
• **MORIMOTO, Tamotsu,**
**Asahi Glass Company, Limited**
**Tokyo 1008405 (JP)**

• **KAWASAKI, Masato,**
**Asahi Glass Company, Limited**
**Tokyo 1008405 (JP)**
• **MIYAZAWA, Hideaki,**
**Asahi Glass Company, Limited**
**Tokyo 1008405 (JP)**

(74) Representative: **Müller-Boré & Partner**
**Patentanwälte**
**Grafinger Strasse 2**
**81671 München (DE)**

(54) **REFLECTOR AND PROCESS FOR PRODUCING THE SAME**

(57)     To provide a reflection mirror having a high reflectance in the visible region and excellent in moisture resistance and sulfur resistance, and its production process.

A reflection mirror 10 comprising a substrate 11, a silicon nitride film 14 and a silver film 13 formed between the substrate 11 and the silicon nitride film 14, wherein when 10 ppm of hydrogen sulfide is introduced, and the reflection mirror is left to stand for 100 hours in an atmosphere at a temperature of 50°C under a relative humidity of 80%, the rate of change of the luminous reflectance (chromaticity Y of the tristimulus value as defined in JIS Z8701 (1982)) after being left to stand is within 10% based on the luminous reflectance before being left to stand. Further, a process for producing a reflection mirror 10, which comprises forming a silver film 13 by a sputtering method and then forming a silicon nitride film 14 by a chemical vapor deposition method.

F i g. 1

EP 1 909 120 A1

**Description**

TECHNICAL FIELD

The present invention relates to a reflection mirror having a high reflectance in the visible region and having moisture resistance and sulfur resistance, and its production process.

BACKGROUND ART

Heretofore, a reflection mirror comprising a substrate of e.g. glass and a metal layer of e.g. aluminum or silver as a reflection film formed on the substrate, to be used for lighting equipment, cell-phones, liquid crystal displays, etc. has been known (e.g. Patent Document 1). In recent years, a reflection mirror comprising a silver film, which has a high reflectance over the entire visible region, has been mainly studied. However, silver is chemically unstable and is thereby likely to be degenerated into silver oxide, silver sulfide or the like by oxygen, moisture, sulfur dioxide, hydrogen sulfide, etc. in the air and to discolor.
To solve the above problem, a reflection mirror comprising, as a protective film, an oxide film of e.g. aluminum oxide formed on the silver film has been disclosed (Patent Document 2). However, for such a reflection mirror, an oxide film of e.g. aluminum oxide is formed on the silver film by a method such as sputtering. In such a case, since the film is formed in an oxidizing atmosphere, the surface of the silver film is likely to be oxidized, and a reflection mirror having a sufficient reflectance is hardly obtained. Further, degeneration of silver by e.g. oxygen, moisture, sulfur dioxide or hydrogen sulfide in the air can not sufficiently be suppressed by such a protective film, and moisture resistance and sulfur resistance of the reflection mirror are not sufficient yet.
Further, a reflection mirror comprising, as a protective film, a film of e.g. aluminum nitride or diamond-like carbon laminated on the silver film has been disclosed (Patent Document 3). Further, a reflection mirror comprising, as a protective film, a silicon nitride film formed on the silver film by a sputtering method has been disclosed (Patent Document 4). However, even with such a protective film, degeneration of silver by e.g. oxygen, moisture, sulfur dioxide or hydrogen sulfide in the air can not sufficiently be suppressed, and moisture resistance and sulfur resistance of the reflection mirror are not sufficient yet.
Patent Document 1: JP-U-5-73809
Patent Document 2: JP-A-2001-343510
Patent Document 3: JP-A-2001-13309
Patent Document 4: JP-A-2001-337210

DISCLOSURE OF THE INVENTION

OBJECT TO BE ACCOMPLISHED BY THE INVENTION

The object of the present invention is to provide a reflection mirror having a high reflectance in the visible region and excellent in moisture resistance and sulfur resistance, and its production process.

MEANS TO ACCOMPLISH THE OBJECT

The reflection mirror of the present invention is a reflection mirror comprising a substrate, a silicon nitride film and a silver film formed between the substrate and the silicon nitride film, wherein when 10 ppm of hydrogen sulfide is introduced and the reflection mirror is left to stand for 100 hours in an atmosphere at a temperature of 50°C under a relative humidity of 80%, the rate of change of the luminous reflectance (chromaticity Y of the tristimulus value as defined in JIS Z8701 (1982)) after being left to stand is within 10% based on the luminous reflectance before being left to stand.
The reflection mirror of the present invention is preferably such that when the reflection mirror is left to stand for 100 hours in an atmosphere at a temperature of 60°C under a relative humidity of 90%, the rate of change of the luminous reflectance (chromaticity Y of the tristimulus value as defined in JIS Z8701 (1982)) after being left to stand is within 5% based on the luminous reflectance before being left to stand.
The reflection mirror of the present invention preferably further has a protective film made of hard carbon formed on the silicon nitride film.
The reflection mirror of the present invention preferably further has an underlayer made of an oxide formed between the substrate and the silver film.
The oxide is preferably titanium oxide represented by $TiO_x$ ($1.5 \leq x < 2$).
It is preferred that the silver film has a thickness of from 60 to 300 nm, and the silicon nitride film has a thickness of from 2 to 20 nm.

The protective film preferably has a thickness of from 2 to 20 nm.

The underlayer preferably has a thickness of from 1 to 50 nm.

The present invention further provides a process for producing a reflection mirror comprising a substrate, a silicon nitride film and a silver film formed between the substrate and the silicon nitride film, which comprises forming the silver film by a sputtering method and then forming the silicon nitride film by a chemical vapor deposition method.

EFFECTS OF THE INVENTION

The reflection mirror of the present invention has a high reflectance in the visible region and is excellent in moisture resistance and sulfur resistance.

According to the process for producing a reflection mirror of the present invention, a reflection mirror having a high reflectance in the visible region and excellent in moisture resistance and sulfur resistance, can be obtained.

BRIEF DESCRIPTION OF THE DRAWING

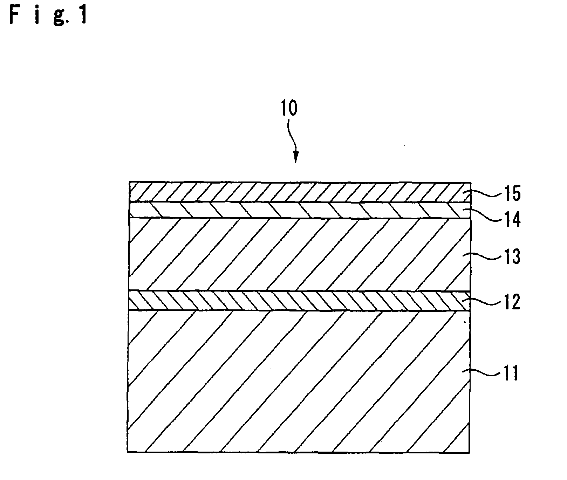

Fig. 1 is a cross section illustrating one example of a reflection mirror of the present invention.

MEANINGS OF SYMBOLS

10:     Reflection mirror

11:     Substrate

12:     Underlayer

13:     Silver film

14:     Silicon nitride film

15:     Protective film

BEST MODE FOR CARRYING OUT THE INVENTION

(REFLECTION MIRROR)

Fig. 1 is a cross section illustrating one example of a reflection mirror of the present invention. A reflection mirror 10 comprises a substrate 11, an underlayer 12 formed on the substrate 11, a silver film 13 formed on the underlayer 12, a silicon nitride film 14 formed on the silver film 13, and a protective film 15 formed on the silicon nitride film 14.

(Substrate)

A material of the substrate 11 may, for example, be glass; or a plastic such as a polyethylene terephthalate, an acrylic resin or a polycarbonate.

The shape of the substrate may be any of various shapes required for the substrate of a reflection mirror, such as a plane, a diffusion surface, a concave, a convex and a trapezoid.

The substrate 11 is particularly preferably a plastic film, with which weight saving is achieved.

The thickness of the substrate 11 is preferably from 30 to 500 $\mu$m in the case of a plane.

The substrate 11 may be subjected to e.g. plasma treatment so as to improve adhesion to e.g. the underlayer 12 or the silver layer 13, in the case of a film.

(Underlayer)

The underlayer 12 is a film made of an oxide. By forming the underlayer, the adhesion between the substrate 11 and the silver film 13 which are in contact therewith, can be increased. As a result, moisture resistance of the reflection mirror 10 will further improve.

The oxide may, for example, be titanium oxide, zinc oxide, tin oxide, indium oxide, aluminum oxide, chromium oxide or niobium oxide. Among them, preferred is titanium oxide in view of adhesion, and particularly preferred is titanium oxide having oxygen defects represented by $TiO_x$ ($1.5 \leqq x < 2$).

The underlayer 12 may be a single layer or may comprise a plurality of layers.

The thickness of the underlayer 12 is preferably from 1 to 50 nm, particularly preferably from 3 to 15 nm. If the thickness of the underlayer 12 is less than 1 nm, the effect of improving the adhesion between the substrate 11 and the silver film 13 is hardly obtained. If the thickness of the underlayer 12 exceeds 50 nm, irregularities on the surface of the underlayer 12 tend to be large, whereby the reflectance tends to deteriorate, or the internal stress tends to be high, whereby the adhesion tends to deteriorate.

In the present invention, the "thickness" means the physical film thickness, and the physical film thickness can be determined by an ellipsometer, a stylus profilometer or the like.

(Silver Film)

The silver film 13 is a film made of silver or a silver alloy, and functions as a reflection film which reflects light. By the reflection film being a silver film 13, the reflectance of the reflection mirror 10 in the visible region can be increased, and the dependence of the reflectance on the incident angle can be reduced. In the present invention, the "visible region" means a wavelength region of from 400 to 700 nm. Further, the "incident angle" means an angle to a line vertical to the film surface.

The silver alloy is preferably an alloy of silver with at least one other metal selected from the group consisting of gold, palladium, tin, gallium, indium, copper, titanium and bismuth, whereby durability of the silver film 13 will improve, and the reflectance will further improve. As other metal, particularly preferred is gold in view of the high temperature high humidity resistance and the reflectance.

In a case where the silver film 13 is a film made of a silver alloy, the amount of silver is preferably from 90 to 99.8 at% based on the total amount (100 at%) of silver and other metal in the silver film 13. Further, the amount of other metal is preferably from 0.2 to 10 at% in view of durability.

The thickness of the silver film 13 is preferably from 60 to 300 nm, particularly preferably from 80 to 200 nm. If the thickness of the silver film 13 is less than 60 nm, the reflectance in the visible region tends to deteriorate. If the thickness of the silver film 13 exceeds 300 nm, irregularities are likely to occur on the surface of the silver film 13, whereby light scattering will occur, and the reflectance in the visible region may deteriorate.

(Silicon Nitride Film)

The silicon nitride film 14 is a film made of silicon nitride, and is a film which suppresses degeneration of the silver film 13 to be in contact therewith and consequently improves moisture resistance and sulfur resistance of the reflection mirror 10.

The silicon nitride film 14 is preferably a silicon nitride film formed by a chemical vapor deposition method (hereinafter referred to as CVD method). The silicon nitride film formed by a CVD method has advantages such as low film stress, good coverage on a complicated shape, and high gas barrier properties, as compared with a silicon nitride film formed by a sputtering method. As a result, sulfur resistance of the reflection mirror 10 will improve.

The thickness of the silicon nitride film 14 is preferably from 2 to 20 nm, particularly preferably from 3 to 15 nm. If the thickness of the silicon nitride film 14 is less than 2 nm, moisture resistance and sulfur resistance of the reflection mirror 10 may be insufficient. If the thickness of the silicon nitride film 14 exceeds 20 nm, the reflectance may decrease due to coloring (absorption) by the silicon nitride film 14.

(Protective Film)

The protective film 15 is a film made of hard carbon, formed as the outermost layer of the reflection mirror 10. By forming the protective film 15, moisture resistance and sulfur resistance of the reflection mirror 10 will further improve.

The reason why the sulfur resistance improves has not been understood in detail yet but is considered to be as follows. Namely, since the bonding energy between carbon atoms in the hard carbon and sulfur atoms in sulfur-containing molecules such as hydrogen sulfide is high, a large quantity of energy will be required when the sulfur-containing molecules are attached to the surface of the protective film 15. Consequently, the sulfur-containing molecules are less likely to be attached to the surface of the protective film 15, thus improving sulfur resistance.

The hard carbon is also called diamond-like carbon (hereinafter referred to as DLC), i-carbon, amorphous carbon or hydrogenated carbon, and known one may properly be used. A film made of hard carbon has excellent properties as a protective film, such as excellent surface smoothness, a low coefficient of friction on the surface, chemical inactivity, and low wettability, which makes it be less likely to be stained.

A typical hard carbon may be DLC. DLC is amorphous hard carbon in which a graphite structure (SP$^2$ orbital) and a diamond structure (SP$^3$ orbital) coexist, having a peak within a range of from 1,400 to 1,600 cm$^{-1}$ in Raman spectrometry.

The hard carbon preferably contains hydrogen atoms, whereby the hardness will increase, and the abrasion resistance and weatherability of the reflection mirror will improve. The reason why the weatherability improves by the hard carbon containing hydrogen atoms has not been understood yet, but is considered to be because uncombined defects present in a large amount in the hard carbon are stabilized by addition of hydrogen atoms. However, in a case where the substrate 11 is a film, the protective film is required to be soft to such an extent that it conforms with the film. Accordingly, the amount of hydrogen atoms is preferably at most 20 at% in the hard carbon (100 at%).

The amount of carbon atoms is preferably at least 50 mass%, more preferably at least 80 mass%, particularly preferably at least 90 mass% in the hard carbon (100 at %).

The total amount of carbon atoms and hydrogen atoms in the hard carbon is preferably at least 95 at% in the hard carbon (100 at%). The hard carbon may contain fluorine atoms in addition to carbon atoms and hydrogen atoms.

The protective film 15 is required to be a transparent film in view of the reflectance of the reflection mirror 10. Specifically, the extinction coefficient in the visible region is preferably at most 0.1, particularly preferably at most 0.08, most preferably at most 0.05. The "extinction coefficient" in the present invention means an imaginary part in a complex refractive index in the visible region and can be measured by a spectroscopic ellipsometer.

The thickness of the protective film 15 is preferably from 2 to 20 nm, particularly preferably from 4 to 10 nm. If the thickness of the protective film 15 is less than 2 nm, the effect to improve adhesion to the silicon nitride film 14 is hardly obtained. If the thickness of the protective film 15 exceeds 20 nm, the reflectance may be low.

(Process for Producing Reflection Mirror)

The reflection mirror 10 is obtained by sequentially forming the respective films on the substrate 11 by a sputtering method, a CVD method, an ion plating method or the like.

As compared with the CVD method or the ion plating method, the sputtering method is preferred in that a film having a large area can be formed, and a transparent film can easily be formed. Further, it is preferred in that the surface roughness can be made small, whereby the reflectance can be maintained at a high level.

The sputtering method may, for example, be an alternate current (AC), direct current (DC) or radio frequency (RF) sputtering method. The DC sputtering method includes a pulse DC sputtering method. The AC sputtering method and the pulse DC sputtering method are effective with a view to preventing abnormal electrical discharge. Further, from a viewpoint that a dense film can be formed, the AC or DC reactive sputtering method is preferred.

The underlayer 12 is preferably formed by the sputtering method. The atmosphere is preferably an atmosphere of a rare gas such as argon containing substantially no oxidative gas. The amount of the oxidative gas such as oxygen is preferably at most 18 vol%.

The target for the underlayer 12 is preferably an oxide target, whereby an oxide film can be formed in an atmosphere containing substantially no oxidative gas. The oxide target may be at least one member selected from the group consisting of titanium oxide, zinc oxide, tin oxide, indium oxide, aluminum oxide, chromium oxide and niobium oxide.

In a case of forming the underlayer 12 by the DC sputtering method, preferred is an oxygen deficient target, whereby it is possible to form a film at a high rate. The oxygen deficient target may, for example, be one represented by $TiO_x$ ($1.5 \leqq x < 2.0$).

The silver film 13 is preferably formed by the sputtering method in an argon gas atmosphere using a target made of silver or a silver alloy.

The silver target is preferably a target containing at least 95 mass% of silver. The silver alloy target is preferably a target containing from 95 to 99.7 mass% of silver and containing from 0.3 to 5.0 mass% of other metal.

The silicon nitride film 14 is preferably formed by the CVD method. Sulfur resistance of the reflection mirror 10 will improve by forming the silicon nitride film 14 by the CVD method.

The CVD method is a method of imparting energy to a gas containing a starting material by heat or light or bringing it in a plasma state by radio frequency to react the starting material thereby to deposit a film of the reaction product.

The starting material may, for example, be a gas mixture of silane gas with ammonia gas.

The protective film 15 can be formed by the sputtering method, the CVD method, the ion plating method or the like using a target containing carbon (graphite) as the main component. Preferred is the sputtering method, whereby a film made of hard carbon can be made amorphous and a denser film made of hard carbon will be obtained. The atmosphere is preferably an atmosphere of a rare gas such as argon containing substantially no oxidative gas. The amount of the oxidative gas is preferably at most 1 vol%.

The reflection mirror 10 preferably has a luminous reflectance as defined in JIS Z8701 of at least 90%, more preferably at least 95%, most preferably at least 97%, whereby the reflectance of the reflection mirror 10 will be high, and when it is used for an imaging device for e.g. a projection TV or a liquid crystal display, an image can be projected without deterioration of the brightness.

When a high temperature high humidity test is carried out in which the reflection mirror 10 is left to stand for 100 hours in an atmosphere at a temperature of 60˚C under a relative humidity of 90%, the rate of change of the luminous reflectance (chromaticity Y of the tristimulus value as defined in JIS Z8701 (1982)) after the high temperature high humidity test is preferably within 5% based on the luminous reflectance before the high temperature high humidity test, whereby the moisture resistance of the reflection mirror 10 will be sufficiently high. The rate of change of the luminous reflectance after the high temperature high humidity test can be determined from the following formula:

$$\text{Rate of change (\%)} = \{1\text{-}(\text{luminous reflectance (\%)}$$
$$\text{after high temperature high humidity test / luminous}$$
$$\text{reflectance (\%) before high temperature high humidity}$$
$$\text{test)}\} \times 100$$

When hydrogen sulfide resistance test is carried out in which 10 ppm of hydrogen sulfide is introduced, and the reflection mirror is left to stand for 100 hours in an atmosphere at a temperature of 50˚C under a relative humidity of 80%, the rate of change of the luminous reflectance (chromaticity Y of the tristimulus value as defined in JIS Z8701 (1982)) after the hydrogen sulfide resistance test is preferably within 10% based on the luminous reflectance before the hydrogen sulfide resistance test, whereby sulfur resistance of the reflection mirror 10 will be sufficiently high. The rate of change of the luminous reflectance after the hydrogen sulfide resistance test can be determined from the following formula:

$$\text{Rate of change (\%)} = \{1\text{-}(\text{luminous reflectance (\%)}$$
$$\text{after hydrogen sulfide resistance test / luminous}$$
$$\text{reflectance (\%) before hydrogen sulfide resistance test)}\}$$
$$\times 100$$

EXAMPLES

Now, the present invention will be described in further detail with reference to Examples. However, the present invention is by no means restricted to the following Examples.

EXAMPLE 1

In a vacuum chamber, a flat polyethylene terephthalate film (thickness: 50 $\mu$m) having an acrylic hard coat applied was set as a substrate.

As targets, a $TiO_x$ oxygen deficient target (tradename: TXO, manufactured by Asahi Glass Ceramics Co., Ltd.) and a gold-doped silver alloy target (gold content: 1 mass%, silver content: 99 mass%) were respectively set so that they were opposed to the substrate on the cathode. The interior of the vacuum chamber was evacuated to $2 \times 10^{-5}$ Pa.

200 sccm of argon gas was introduced to the vacuum chamber, and the substrate was irradiated with ionized argon ions from an ion beam source (LIS-150, tradename, manufactured by ADVANCED ENERGY INDUSTRIES, INC.) by applying an electric power of 100 W to carry out dry cleaning of the substrate.

Then, as a sputtering gas, argon gas was introduced to the vacuum chamber. By a DC sputtering method, pulse sputtering with a reverse pulse duration of 1 $\mu$sec was carried out under a pressure of 0.15 Pa at a frequency of 100 kHz at a power density of 0.79 W/cm$^2$ by means of a $TiO_x$ oxygen deficient target to form a titanium oxide film (underlayer) in a thickness of 5 nm on the substrate. The composition of the titanium oxide film was equal to the target.

Then, the residual gas was discharged, and then, as a sputtering gas, argon gas was introduced to the vacuum chamber. By a DC sputtering method, pulse sputtering with a reverse pulse duration of 5 $\mu$sec was carried out under a pressure of 0.15 Pa at a frequency of 100 kHz at a power density of 2.46 W/cm$^2$ by means of a gold-doped silver alloy target to form a gold-doped silver alloy film in a thickness of 150 nm on the titanium oxide film. The composition of the silver alloy film was equal to the target.

Then, using a plasma enhanced CVD apparatus (manufactured by ULVAC, Inc., model: CIH-130), a silicon nitride film was formed on the silver alloy film. As raw materials (source gas), silane gas ($SiH_4$) and ammonia gas ($NH_3$) were used. The raw materials were supplied at a flow rate ratio of $NH_3$/$SiH_4$ of 20 vol%, and radio frequency at 27.12 MHz were applied to the raw materials at 400 W under a pressure of 100 Pa to bring the raw materials into a plasma state, to form a silicon nitride film in a thickness of 10 nm. The substrate temperature at the film formation was 80˚C.

The obtained reflection mirror was subjected to the following evaluation. The results are shown in Tables 1 to 3.

## (1) HIGH TEMPERATURE HIGH HUMIDITY TEST

The reflection mirror was cut into 50 mm $\times$ 100 mm to obtain a sample. The sample was left to stand for 100 hours in an atmosphere at a temperature of 60˚C under a relative humidity of 90%, whereupon the delamination and the presence or absence of corrosion were ascertained.

○: No delamination or corrosion was observed.

✕: Delamination and/or corrosion was observed.

## (2) HIGH TEMPERATURE TEST

The reflection mirror was cut into 50 mm $\times$ 100 mm to obtain a sample. The sample was left to stand for 100 hours in an atmosphere at a temperature of 85˚C under a relative humidity of at most 30%, whereupon delamination and the presence or absence of corrosion were ascertained.

○: No delamination or corrosion was observed.

✕: Delamination and/or corrosion was observed.

## (3) TAPE-PEELING TEST

The film surface of the reflection mirror was cut by a cutter to form 100 cross-cut sections. An adhesive tape (manufactured by Nichiban Co., Ltd.) was strongly bonded to the film surface manually and rapidly peeled, whereupon the presence or absence of peeling of the cross-cut sections of the film surface was ascertained. A case where no peeling was observed was rated to be 100/100, and a case where all sections were peeled was rated to be 0/100. Such a peeling test was carried out immediately after the film deposition, after the high temperature high humidity test and after the high temperature test.

## (4) FILM SURFACE REFLECTANCE

By means of a color analyzer (TOPSCAN, tradename, manufactured by Tokyo Denshoku Co., Ltd.), the reflectance of the film surface side was measured, and chromaticity Y of the tristimulus value as defined in JIS Z8701 (1982) was obtained by calculation to determine the luminous reflectance. The measurement was carried out by a SCI system by measuring both the regular reflected light and the diffusion light. The luminous reflectance was measured immediately after the film deposition, after the high temperature high humidity test and after the high temperature test.

## (5) HYDROGEN SULFIDE RESISTANCE TEST

The reflection mirror was cut into 50 $\times$ 100 mm to obtain a sample. 10 ppm of hydrogen sulfide was introduced, and the sample was left to stand for 100 hours in an atmosphere at a temperature of 50˚C under a relative humidity of 80%, whereupon the luminous reflectance, and the delamination and the presence or absence of corrosion were ascertained. The luminous reflectance was measured by the same method as in (4).

With respect to the presence or absence of corrosion, evaluation was made under the following evaluation standards.

○: No delamination or corrosion was observed.

Δ: Delamination or corrosion was slightly observed, but was not a practically problematic level.

✕: Delamination and/or corrosion was observed.

## EXAMPLE 2

On the silicon nitride film in Example 1, a DLC film (protective film) was formed.

As a sputtering gas, hydrogen and argon gas were respectively introduced to the vacuum chamber and adjusted so that the amount of hydrogen was 50 vol% in the sputtering gas. Oxygen was not intentionally introduced. By a DC sputtering method, pulse sputtering with a reverse pulse duration of 4.5 $\mu$sec was carried out under a pressure of 0.25 Pa at a frequency of 100 kHz at a power density of 1.48 W/cm$^2$ by means of a graphite target (IG-15, tradename, manufactured by TOYO TANSO CO., LTD., carbon content: at least 99.6 mass%) to form a DLC film in a thickness of 5 nm to obtain a reflection mirror in Example 2. The obtained reflection mirror was subjected to evaluation in the same manner as in Example 1. The results are shown in Tables 1 to 3.

COMPARATIVE EXAMPLE 1

A reflection mirror was obtained in the same manner as in Example 1 except that the silicon nitride film was formed by a sputtering method.

As a sputtering gas, a gas mixture having 30 mass% of nitrogen gas mixed with argon gas was introduced to the vacuum chamber. By a DC sputtering method, pulse sputtering with a reverse pulse duration of 1 $\mu$sec was carried out under a pressure of 0.25 Pa at a frequency of 100 kHz at a power density of 1.48 W/cm$^2$ by means of a boron-doped polycrystalline silicon target having a resistivity of 0.004 $\Omega$.cm to form a silicon nitride film in a thickness of 15 nm. The obtained reflection mirror was subjected to evaluation in the same manner as in Example 1. The results are shown in Tables 1 to 3.

COMPARATIVE EXAMPLE 2

A reflection mirror was obtained in the same manner as in Example 1 except that an aluminum nitride film was formed instead of the silicon nitride film.

As a sputtering gas, a gas mixture having 30 mass% of nitrogen gas mixed with argon gas was introduced to the vacuum chamber. By a DC sputtering method, pulse sputtering with a reverse pulse duration of 1 $\mu$sec was carried out under a pressure of 0.25 Pa at a frequency of 100 kHz at a power density of 1.72 W/cm$^2$ by means of an aluminum target having a purity of 99.9 mass% to form an aluminum nitride film in a thickness of 15 nm. The obtained reflection mirror was subjected to evaluation in the same manner as in Example 1. The results are shown in Tables 1 to 3.

TABLE 1

| | High temperature high humidity test | High temperature test | Tape-peeling test | | |
|---|---|---|---|---|---|
| | | | Immediately after film deposition | After high temperature high humidity test | After high temperature test |
| Ex. 1 | ○ | ○ | 100/100 | 100/100 | 100/100 |
| Ex. 2 | ○ | ○ | 100/100 | 100/100 | 100/100 |
| Comp. Ex. 1 | × | ○ | 100/100 | 100/100 | 100/100 |
| Comp. Ex. 2 | × | ○ | 100/100 | 85/100 | 100/100 |

TABLE 2

| | Luminous reflectance (%) | | | Rate of change (%) after high temperature high humidity test |
|---|---|---|---|---|
| | Immediately after film deposition | After high temperature high humidity test | After high temperature test | |
| Ex. 1 | 95.8 | 97.3 | 97.4 | 1.57 |
| Ex. 2 | 95.3 | 96.4 | 96.8 | 1.15 |
| Comp. Ex. 1 | 94.8 | 96.3 | 96.5 | 1.58 |
| Comp. Ex. 2 | 95.3 | 96.1 | 96.3 | 0.84 |

TABLE 3

|  | After hydrogen sulfide resistance test | Luminous reflectance (%) (after hydrogen sulfide resistance test) | Rate of change (%) after hydrogen sulfide resistance test |
|---|---|---|---|
| Ex. 1 | ○ | 93.1 | 2.82 |
| Ex. 2 | ○ | 93.8 | 1.57 |
| Comp. 1 Ex. 1 | × | 84.8 | 10.55 |
| Comp. Ex. 2 | × | 61.1 | 35.89 |

INDUSTRIAL APPLICABILITY

The reflection mirror of the present invention is useful as a reflection member for a light source for a display to be used for flat panel displays, projection TV, cell-phones, etc., particularly as a reflection member for a light source for displays of electronic equipment such as mobile personal computers, cell-phones, PDAs and portable game equipment.
The entire disclosure of Japanese Patent Application No. 2005-201541 filed on July 11, 2005 including specification, claims, drawings and summary is incorporated herein by reference in its entirety.

**Claims**

1.   A reflection mirror comprising a substrate, a silicon nitride film and a silver film formed between the substrate and the silicon nitride film, wherein when 10 ppm of hydrogen sulfide is introduced and the reflection mirror is left to stand for 100 hours in an atmosphere at a temperature of 50°C under a relative humidity of 80%, the rate of change of the luminous reflectance (chromaticity Y of the tristimulus value as defined in JIS Z8701 (1982)) after being left to stand is within 10% based on the luminous reflectance before being left to stand.

2.   The reflection mirror according to Claim 1, wherein when the reflection mirror is left to stand for 100 hours in an atmosphere at a temperature of 60°C under a relative humidity of 90%, the rate of change of the luminous reflectance (chromaticity Y of the tristimulus value as defined in JIS Z8701 (1982)) after being left to stand is within 5% based on the luminous reflectance before being left to stand.

3.   The reflection mirror according to Claim 1 or 2, which further has a protective film made of hard carbon formed on the silicon nitride film.

4.   The reflection mirror according to any one of Claims 1 to 3, which further has an underlayer made of an oxide formed between the substrate and the silver film.

5.   The reflection mirror according to Claim 4, wherein the oxide is titanium oxide represented by $TiO_x$ ($1.5 \leqq x < 2$).

6.   The reflection mirror according to any one of Claims 1 to 5, wherein the silver film has a thickness of from 60 to 300 nm, and the silicon nitride film has a thickness of from 2 to 20 nm.

7.   The reflection mirror according to Claim 3, wherein the protective film has a thickness of from 2 to 20 nm.

8.   The reflection mirror according to Claim 4, wherein the underlayer has a thickness of from 1 to 50 nm.

9.   A process for producing a reflection mirror comprising a substrate, a silicon nitride film and a silver film formed between the substrate and the silicon nitride film, which comprises forming the silver film by a sputtering method and then forming the silicon nitride film by a chemical vapor deposition method.

F i g. 1

## INTERNATIONAL SEARCH REPORT

| International application No. |
|---|
| PCT/JP2006/313125 |

**A. CLASSIFICATION OF SUBJECT MATTER**
*G02B5/08* (2006.01) i

According to International Patent Classification (IPC) or to both national classification and IPC

**B. FIELDS SEARCHED**

Minimum documentation searched (classification system followed by classification symbols)
G02B5/08

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 6-184751 A (Matsushita Electric Works, Ltd.),<br>05 July, 1994 (05.07.94),<br>Full text; all drawings; particularly,<br>Claims 1 to 4<br>& JP 3016668 B2 | 1-2,6-7,9<br>3-5,8 |
| X<br>Y | JP 2005-70240 A (Kabushiki Kaisha Tsujiden),<br>17 March, 2005 (17.03.05),<br>Full text; all drawings; particularly,<br>Claims 1 to 12; Par. Nos. [0019] to [0027]<br>& WO 2005/019880 A1 | 1-2,4,6,8-9<br>3,5,7 |

| ☒ | Further documents are listed in the continuation of Box C. | ☐ | See patent family annex. |
|---|---|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 September, 2006 (27.09.06) | 03 October, 2006 (03.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/313125

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 61-36703 A  (The United States of America),<br>21 February, 1986 (21.02.86),<br>Full text; all drawings; particularly, Claims;<br>page 3, upper right column, lines 5 to 18;<br>page 4, lower left column, lines 1 to 10<br>& US 4780372 A          & US 4963012 A<br>& FR 2568021 A | 1-2,6,9<br>3-5,7-8 |
| Y | JP 2001-13309 A  (Matsushita Electric Works,<br>Ltd.),<br>19 January, 2001 (19.01.01),<br>Full text; all drawings; particularly,<br>Claims 1 to 13; Par. Nos. [0010] to [0011]<br>(Family: none) | 3,7 |
| Y | JP 2002-55213 A  (Canon Inc.),<br>20 February, 2002 (20.02.02),<br>Full text; all drawings; particularly,<br>Claims 1 to 15<br>& US 2002/0008914 A1     & US 6535336 B2<br>& CN 1329259 A          & TW 503326 A | 5 |
| Y | JP 7-286259 A  (Asahi Glass Co., Ltd.),<br>31 October, 1995 (31.10.95),<br>Full text; all drawings; particularly,<br>Claims 1 to 5<br>(Family: none) | 1-9 |
| A | JP 63-100043 A  (Nippon Sheet Glass Co., Ltd.),<br>02 May, 1988 (02.05.88),<br>Full text; all drawings; particularly,<br>Claims; page 2, upper left column, line 11 to<br>lower left column, line 1<br>(Family: none) | 1-9 |
| A | JP 10-503745 A  (Cardinal IG Co.),<br>07 April, 1998 (07.04.98),<br>Full text; all drawings; particularly, Claims<br>& WO 95/29883 A1          & EP 758306 A1<br>& EP 758306 B1          & US 5834103 A<br>& US 6673438 B1          & US 2004/0115443 A1<br>& US 6942917 B2          & US 2005/0266160 A1<br>& MX 9605356 A1          & MX 197809 B<br>& JP 3348245 B2 | 1-9 |

Form PCT/ISA/210 (continuation of second sheet) (April 2005)

| INTERNATIONAL SEARCH REPORT | International application No. |
| --- | --- |
| | PCT/JP2006/313125 |

The invention of claim 1 relates to a reflector and specifies such a property that "when the reflector is placed for 100 hr in an atmosphere containing 10 ppm of hydrogen sulfide and having a temperature of 50°C and a relative humidity of 80%, the difference in luminous reflectance (chromaticity Y of tristimulus values specified in JIS Z 8701 (1982)) between before standing and after standing is not more than 10%". Claim 2 specifies a property that the difference in luminous reflectance is "not more than 5%".

However, the parameter of the difference in luminous reflectance is not a parameter commonly used in the technical field of the reflector, and, further, general solution means, which can realize a property which brings the parameter value to a predetermined value or less is not clear. Accordingly, it is difficult even in view of the common general technical knowledge at the time of filing to specify the range of the reflector specified by the above parameter. Thus, claims 1 and 2 and the claims dependent upon claim 1 do not satisfy the requirement of clearness as provided for in PCT Article 6.

Further, what is actually disclosed in the description within the meaning of PCT Article 5 is only a specific embodiment like a reflector comprising a silicon nitride film produced by plasma CVD under specific conditions described in the working example. Thus, claims 1 and 2 and the claims dependent upon claim 1 are inadequately supported within the meaning of PCT Article 6.

Accordingly, this search has been made only on reflectors of Examples 1 and 2 concretely described in the description.

Form PCT/ISA/210 (extra sheet) (April 2005)

**EP 1 909 120 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5073809 U
- JP 2001343510 A
- JP 2001013309 A
- JP 2001337210 A
- JP 2005201541 A